# EUROPÄISCHE PATENTANMELDUNG

(11) **EP 3 281 961 A1**
(43) Veröffentlichungstag der Anmeldung: **14.02.2018**
(21) Anmeldenummer: 16183892.5
(22) Anmeldetag: 11.08.2016
(51) Int. Cl.: C08G 18/48, C08G 18/69, C08G 18/12, C08G 18/22, C08G 18/28, C09J 163/00, C08L 63/00, C08G 18/24

(54) **VERFAHREN ZUR HERSTELLUNG BLOCKIERTER POLYURETHAN-SCHLAGZÄHIGKEITSMODIFIKATOREN ZUR VERBESSERUNG DER SCHLAGZÄHIGKEIT EINKOMPONENTIGER EPOXIDKLEBSTOFFE**

(71) Anmelder: Sika Technology AG, 6340 Baar (CH)
(72) Erfinder: Krüger, Christian, 8952 Schlieren (CH); Rheinegger, Urs, 8105 Regensdorf (CH); Montemayor, Porfirio, 8309 Birchwil (CH); Wolf, Ulrich, 7031 Laax (CH)
(74) Vertreter: Sika Patent Attorneys

(57) **Zusammenfassung**

Verfahren zur Herstellung eines Schlagzähigkeitsmodifikators welcher ein Isocyanat-terminiertes Polymer ist, dessen Isocyanatgruppen durch Reaktion mit einem Blockierungsmittel teilweise oder vollständig blockiert sind, umfassend die Schritte:
A) die Zugabe zur einer Mischung umfassend
a) zwei oder mehr Polyole umfassend a1) Polytetramethylenetherglycol und a2) mindestens ein Hydroxyterminiertes Polybutadien, wobei der Gesamtanteil an Polytetramethylenetherglycol und Hydroxy-terminiertem Polybutadien mindestens 95 Gew.-%, bezogen auf das Gesamtgewicht der Polyole, beträgt,
und b) mindestens einem acyclischen aliphatischen oder cycloaliphatischen Polyisocyanat
und c) mindestens einem Blockierungsmittel ausgewählt aus der Gruppe bestehend aus Phenolen, 2-Benzoxazolinonen und Pyrazolen,
von d) mindestens einem Katalysator K1 und nachfolgend B) die Zugabe von mindestens einem Katalysator K2,
unter Bildung des teilweise oder vollständig blockierten Isocyanatterminierten Polymers.

Die Erfindung betrifft auch die in diesem Verfahren enthaltenen Schlagzähigkeitsmodifikatoren, deren Verwendung und diese Schlagzähigkeitsmodifikatoren enthaltende Epoxidharzformulierungen.

## Beschreibung

### Technisches Gebiet

Die Erfindung betrifft Verfahren zur Herstellung von blockierten polyurethanbasierten Schlagzähigkeitsmodifikatoren für einkomponentige Epoxidharzklebstoffe.

### Stand der Technik

Herkömmliche Epoxidklebstoffe zeichnen sich zwar durch eine hohe mechanische Festigkeit, insbesondere eine hohe Zugfestigkeit aus. Bei schlagartiger Beanspruchung der Verklebung sind klassische Epoxidklebstoffe jedoch meist zu spröde und können deshalb unter Crashbedingungen, bei denen sowohl große Zug- als auch Schälbeanspruchungen auftreten, den Anforderungen, insbesondere der Automobilindustrie, bei weitem nicht genügen. Ungenügend sind diesbezüglich oft besonders die Festigkeiten bei hohen, insbesondere aber bei tiefen Temperaturen (z.B. < -10 °C).

Da es sich bei diesen Klebstoffen insbesondere um strukturelle Klebstoffe handelt und deshalb diese Klebstoffe strukturelle Teile verkleben, sind eine hohe Festigkeit und Schlagzähigkeit des Klebstoffes von größter Wichtigkeit.

Um die Schlagzähigkeit von Epoxidklebstoffen zu verbessern, werden diesen sogenannte Schlagzähigkeitsmodifikatoren zugesetzt. Ein Schlagzähigkeitsmodifikator, der auch als Toughener bezeichnet wird, ist in Strukturklebern einer der wichtigsten Formulierungsbestandteile. Er beeinflusst entscheidend wichtige Kenngrößen wie Schlagzähigkeit, Alterungsbeständigkeit und Haftung.

Es ist bereits eine breite Palette von Schlagzähigkeitsmodifikatoren für Epoxidharze bekannt. Dabei handelt es sich hauptsächlich um flüssige Copolymere oder vorgeformte Core-Shell Partikel. Ein wichtiger Typ von Schlagzähigkeitsmodifikatoren sind blockierte Polyurethan-Toughenerpolymere für crashfeste strukturelle Klebstoffe.

Erwähnte blockierte Polyurethan-Toughenerpolymere werden typischerweise in einem 2-Schritt-Verfahren hergestellt. In einem ersten Schritt wird durch Umsetzung von Polyolen und Polyisocyanaten ein Isocyanat-terminiertes Polymers erhalten. In einem zweiten Schritt wird das erhaltene Isocyanat-terminierte Polymer mit einem Blockierungsmittel teilweise oder vollständig blockiert. Ein solches 2-Schritt-Verfahren hat jedoch den Nachteil, dass es sehr zeitaufwändig ist. Dazu trägt insbesondere die Zugabe des Blockierungsmittels in dem zweiten Schritt bei. Dies aufgrund der benötigten Zeit bis die Blockierungsmittelzugabe abgeschlossen ist sowie der zusätzlichen Aufheizzeit, um nach Zugabe des (typischerweise kühleren) Blockierungsmittels wieder auf die benötigte Reaktionstemperatur aufzuheizen. Insbesondere in grossen Ansätzen fallen diese Nachteile ins Gewicht. So kann beispielsweise in einer grosstechnischen Herstellung erwähnter Polyurethan-Toughenerpolymere bei wärmeempfindlicheren Blockierungsmitteln die Zugabe erwähnter Blockierungsmittel vier Stunden oder mehr dauern, einerseits aufgrund des hohen Gewichtanteils, bezogen auf die Gesamtmischung (Zugabezeit von ca. 2 h), andererseits da solche Blockierungsmittel vor der Zugabe typischerweise nicht höher als 60°C erwärmt werden (Aufwärmezeit auf Reaktionstemperatur von weiteren 2 h). Eine besondere Herausforderung liegt nun hierbei in der Bereitstellung eines Herstellungsverfahrens, das eine kürzere Herstellungszeit erlaubt und gleichzeitig zu blockierten Polyurethan-Toughenerpolymeren führt, die eine gleichwertige Performance aufweisen wie die in den erwähnten 2-Schritt-Verfahren hergestellten Polymere.

### Darstellung der Erfindung

Die Aufgabe der vorliegenden Erfindung bestand daher in der Bereitstellung eines Herstellungsverfahrens für Schlagzähigkeitsmodifikatoren, welche die vorstehend beschriebenen Probleme des Standes der Technik überwinden. Insbesondere soll die Herstellungszeit verringert werden bei gleichzeitiger Beibehaltung der mechanischen Eigenschaften der Klebstoffe, welche den erfindungsgemäßen Schlagzähigkeitsmodifikator enthalten.

Es sollen also im Vergleich zum Stand der Technik vergleichbare, vorzugsweise sogar bessere, mechanische Eigenschaften bei Klebstoffen erreicht werden, welche Schlagzähigkeitsmodifikatoren hergestellt nach dem erfindungsgemässen Verfahren enthalten, insbesondere hinsichtlich E-Modul, Bruchdehnung und Zugfestigkeit, Zugscherfestigkeit, Winkelschälfestigkeit und insbesondere Schlagschälfestigkeit. Zudem sollen die Epoxidklebstoffe eine vergleichbare Lagerstabilität aufweisen.

Es wurde überraschenderweise gefunden, dass diese Anforderungen mit einem Herstellungsverfahren erreicht werden können, bei dem Polyol, Polyisocyanat und Blockierungsmittel in einer gemeinsamen Mischung zusammen unter Zugabe von einem ersten Katalysator umgesetzt werden, wobei in einem weiteren Schritt ein zweiter Katalysator zugegeben wird. Das erfindungsgemässe Verfahren kommt ohne den zusätzlichen Schritt einer nachträglichen Blockierungsmittelzugabe aus und führt dadurch nicht zu dem damit verbundenen Zeitverlust.

Überraschenderweise weisen Klebstoffe, welche nach dem erfindungsgemässen Verfahren hergestellte Schlagzähigkeitsmodifikatoren enthalten, vergleichbare mechanische Eigenschaften auf wie sie mit herkömmlich hergestellten Schlagzähigkeitsmodifikatoren erreicht werden.

Besonders überraschend war die Erkenntnis, dass sich die Werte der Winkelschälfestigkeit und der Schlagschälfestigkeit sogar noch verbessern.

In einer bevorzugten Ausführungsform wurde gefunden, dass durch die Auswahl von Bismuth-Katalysatoren als zweiten Katalysator eine bessere Lagerstabilität der Schlagzähigkeitsmodifikatoren erreicht wird. Weiter erlaubt diese Ausführungsform unter anderem eine Herabsetzung der Reaktionstemperatur und Verkürzung der Reaktionszeit.

Dementsprechend betrifft die Erfindung ein Verfahren zur Herstellung eines Schlagzähigkeitsmodifikators welcher ein Isocyanat-terminiertes Polymer ist, dessen Isocyanatgruppen durch Reaktion mit einem Blockierungsmittel teilweise oder vollständig blockiert sind, umfassend die Schritte:
A) die Zugabe zur einer Mischung umfassend
   a) zwei oder mehr Polyole umfassend a1) Polytetramethylenetherglycol und a2) mindestens ein Hydroxy-terminiertes Polybutadien, wobei der Gesamtanteil an Polytetramethylenetherglycol und Hydroxy-terminiertem Polybutadien mindestens 95 Gew.-%, bezogen auf das Gesamtgewicht der Polyole, beträgt,
   und b) mindestens einem acyclischen aliphatischen oder cycloaliphatischen Polyisocyanat
   und c) mindestens einem Blockierungsmittel ausgewählt aus der Gruppe bestehend aus Phenolen, 2-Benzoxazolinonen und Pyrazolen, wobei das Mol-Verhältnis von a) : b) : c) von 0.75-1.2 : 0.8-1.2 : 0.8-1.5 beträgt,
   von d) mindestens einem Katalysator **K1** und nachfolgend
B) die Zugabe von mindestens einem Katalysator **K2,**
unter Bildung des teilweise oder vollständig blockierten Isocyanat-terminierten Polymers.

Die Erfindung betrifft auch die in diesem Verfahren enthaltenen Schlagzähigkeitsmodifikatoren, deren Verwendung und diese Schlagzähigkeitsmodifikatoren enthaltende Epoxidharzformulierungen. Bevorzugte Ausführungsformen sind in den abhängigen Ansprüchen wiedergegeben.

### Weg zur Ausführung der Erfindung

Die Vorsilbe Poly in Ausdrücken wie Polyol oder Polyisocyanat bedeutet, dass die Verbindung zwei oder mehr der genannten Gruppen aufweist. Ein Polyol ist somit eine Verbindung mit zwei oder mehr Hydroxygruppen. Ein Polyisocyanat ist eine Verbindung mit zwei oder mehr Isocyanatgruppen. Dementsprechend ist ein Diol bzw. ein Diisocyanat eine Verbindung mit zwei Hydroxygruppen bzw. zwei Isocyanatgruppen.

Ein Hydroxy-terminiertes Polymer ist ein Polymer, das als Endgruppen Hydroxygruppen aufweist. Ein Isocyanat-terminiertes Polymer ist ein Polymer, das als Endgruppen Isocyanatgruppen aufweist. Bei dem erfindungsgemäßen Polymer sind diese Isocyanatgruppen teilweise oder vollständig blockiert.

Eine organische Metallverbindung ist eine Metallverbindung, die mindestens einen organischen Liganden aufweist.

Als "Raumtemperatur" wird eine Temperatur von 25 °C bezeichnet.

Der Schlagzähigkeitsmodifikator gemäß der Erfindung ist ein Isocyanat-terminiertes Polymer, dessen Isocyanatgruppen durch Umsetzung mit einem Blockierungsmittel teilweise oder vollständig blockiert sind, hergestellt durch das erfindungsgemässe Verfahren.

Die Umsetzung von Polyolen und Polyisocyanaten im Allgemeinen ist eine übliche Reaktion zur Bildung von Polyurethanen. Das gebildete Isocyanat-terminierte Polymer ist somit insbesondere ein Isocyanat-terminiertes Polyurethan-Polymer.

Die zwei oder mehr Polyole zur Herstellung des Isocyanat-terminierten Polymers umfassen a1) Polytetramethylenetherglycol. Es können ein oder mehrere Polytetramethylenetherglycole eingesetzt werden. Polytetramethylenetherglycol wird auch als Polytetrahydrofuran oder PTMEG bezeichnet. PTMEG kann z.B. durch Polymerisation von Tetrahydrofuran, z.B. über saure Katalyse, hergestellt werden. Die Polytetramethylenetherglycole sind insbesondere Diole.

Polytetramethylenetherglycole sind im Handel erhältlich, z. B. die PolyTHF^{®}-Produkte von BASF wie PolyTHF^{®}2000, PolyTHF^{®}2500 CO oder PolyTHF^{®}3000 CO, die Terathane^{®}-Produkte von Invista B.V oder die Polymeg^{®} Produkte von LyondeIIBaseII.

Die OH-Funktionalität des eingesetzten Polytetramethylenetherglycols liegt bevorzugt im Bereich von etwa 2, z.B. im Bereich von 1,9 bis 2,1. Dies ist durch die kationische Polymerisation des Ausgangsmonomeren Tetrahydrofuran gegeben.

Vorteilhaft sind Polytetramethylenetherglycole mit OH-Zahlen zwischen 170 mg/KOH g bis 35 mg KOH/g, bevorzugt im Bereich von 100 mg KOH/g bis 40 mg KOH/g, und ganz besonders bevorzugt 70 bis 50 mg KOH/g. Sofern nicht anders angegeben, wird in der vorliegenden Anmeldung die OH-Zahl titrimetrisch gemäß DIN 53240 bestimmt. Hierbei wird die Hydroxylzahl durch Acetylierung mit Essigsäureanhydrid und nachfolgender Titration des überschüssigen Essigsäureanhydrids mit alkoholischer Kalilauge bestimmt.

Mit Kenntnis der Difunktionalität können aus den titrimetrisch ermittelten Hydroxylzahlen die OH-Äquivalentgewichte beziehungsweise das mittlere Molekulargewicht des eingesetzten Polytetramethylenetherglycols bestimmt werden.

Vorteilhaft in der vorliegenden Erfindung eingesetzte Polytetramethylenetherglycole weisen bevorzugt ein mittleres Molekulargewicht im Bereich von 500 bis 5000 g/mol, bevorzugter 1000 bis 3000 g/mol und besonders bevorzugt im Bereich von 1.500 bis 2.500 g/mol, insbesondere etwa 2000 g/mol, auf. Die Angaben beziehen sich auf die Berechnung des Molekulargewichts aus den titrimetrisch bestimmten Hydroxylzahlen wie vorstehend angegeben, wobei eine Funktionalität von 2 für PTMEG angenommen wird. Diese Bestimmungsmethode wird auch üblicherweise von den Produzenten dieser Polymere verwendet.

Die zwei oder mehr Polyole zur Herstellung des Isocyanat-terminierten Polymers umfassen ferner a2) mindestens ein Hydroxy-terminiertes Polybutadien. Es können auch Mischungen von zwei oder mehr Hydroxy-terminierten Polybutadienen eingesetzt werden.

Das oder die Hydroxy-terminierten Polybutadiene zur Herstellung des Isocyanat-terminierten Polymers sind insbesondere solche, die durch radikalische Polymerisation von 1,3-Butadien hergestellt werden, wobei z.B. ein Azonitril oder Wasserstoffperoxid als Initiator verwendet wird, sowie deren Hydrierungsprodukte. Hydroxy-terminierte Polybutadiene sind im Handel erhältlich, z.B. die Poly bd®- Produkte von Cray Valley wie Poly bd® R45V, Polyvest^{®}HT von Evonik sowie Hypro^{®}2800X95HTB von Emerald Performance Materials LLC.

Das Hydroxy-terminierte Polybutadien weist bevorzugt ein Zahlenmittel des Molekulargewichts (Mn), z.B. bestimmt durch Gel-Permeations-Chromatographie (GPC) mit THF als Eluent und Kalibration mit 1,4-Polybutadiene-Standards, von weniger als 15.000 bevorzugt weniger als 5.000, auf, wobei das Mn bevorzugt im Bereich von 2000 bis 4000 g/mol liegt. Die OH-Funktionalität des Hydroxy-terminierten Polybutadiens liegt bevorzugt im Bereich von 1,7 bis 2,8, bevorzugt von 2,4 bis 2,8.

Bezogen auf das Gesamtgewicht der in der Mischung eingesetzten Polyole beträgt der Gesamtanteil an Polytetramethylenetherglycol und Hydroxy-terminiertem Polybutadien mindestens 95 Gew.-% und bevorzugt mindestens 98 Gew.-%. In einer bevorzugten Ausführungsform werden nur Polytetramethylenetherglycol und Hydroxy-terminiertes Polybutadien als Polyole eingesetzt.

Neben Polytetramethylenetherglycol und Hydroxy-terminiertem Polybutadien kann gegebenenfalls mindestens ein davon verschiedenes Polyol eingesetzt werden, insbesondere als Kettenverlängerer fungierende Polyole wie bevorzugt Tetramethylenglycol (TMP) oder ein trifunktionelles Polyetherpolyol auf Polybutylenoxidbasis wie z.B. DOW VORAPEL T5001, in geringen Mengen von weniger als 5 Gew.-%, bevorzugt weniger als 2 Gew.-%, bezogen auf das Gesamtgewicht der eingesetzten Polyole, hinzugegeben werden. Der Kettenverlängerer ist vorzugsweise ein Polyol mit einem Molekulargewicht Mn von nicht mehr als 1500 g/mol, bevorzugter nicht mehr als 1000 g/mol. Hierdurch kann die isocyanatseitige Kettenverlängerung mit einer polyolseitigen Kettenverlängerung kombiniert werden.

Das Gewichtsverhältnis von a1) Polytetramethylenetherglycol zu a2) dem mindestens einen Hydroxy-terminierten Polybutadien (a1/a2) liegt bevorzugt im Bereich von 70/30 bis 30/70, bevorzugter von 60/40 bis 40/60 und ganz besonders bevorzugt im Bereich von etwa 50/50.

Die Mischung in Schritt A) umfasst b) mindestens ein acyclischen aliphatisches oder cycloaliphatisches Polyisocyanat. Es können ein oder mehrere acyclische aliphatische oder cycloaliphatische Polyisocyanate eingesetzt werden. Aliphatische Polyisocyanate umfassen acyclische und cyclische aliphatische Polyisocyanate. Cyclische aliphatische Polyisocyanate werden auch als cycloaliphatische Polyisocyanate bezeichnet. Bevorzugt ist das Polyisocyanat ein Diisocyanat.

Bevorzugte Diisocyanate sind acyclische aliphatische oder cycloaliphatische Diisocyanate, wobei es sich bevorzugt um monomere Diisocyanate oder Dimere davon handelt. Beispiele sind 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexa-methylendiisocyanat (TMDI), 1,10-Decamethylendiisocyanat, 1,12-Dodecamethylen-diisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H6TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H12MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimetyldiisocyanat) oder Dimere davon, sowie beliebige Mischungen der vorgenannten Isocyanate. Besonders bevorzugt sind HDI und IPDI und deren Dimere.

Am meisten bevorzugt umfassen oder sind die acyclischen aliphatischen oder cycloaliphatischen Polyisocyanate Hexamethylendiisocyanat und/oder Isophorondiisocyanat, insbesondere sind sie Isophorondiisocyanat.

Das Mol-Verhältnis von a) : b) : c) beträgt von 0.75-1.2 : 0.8-1.2 : 0.8-1.5, vorzugsweise von 0.8-1.1 : 0.9-1.1 : 1.0 -1.4, insbesondere bevorzugt von 0.9-1.05 : 0.95-1.05 : 1.1 -1.3.

Für die Umsetzung der Mischung umfassend a), b) und c) wird in Schritt A) ein Katalysator K1 eingesetzt. Der Katalysator beschleunigt die Reaktion der Isocyanate mit den Polyolen sowie die Blockierungsreaktion. Dabei handelt es sich vorzugsweise um organische Metallverbindungen als Katalysatoren, insbesondere Organozinnverbindungen, sowie Gemische davon.

Überraschenderweise wurde gefunden, dass in einem Verfahren ohne die Zugabe von mindestens einem Katalysator K2 durch Schritt B) die gesamte Reaktionszeit bis zum Erhalt von teilweise oder vollständig blockierten Isocyanat-terminierten Polymeren, signifikant länger (mehrere Stunden) war, insbesondere verlängerte sich die Zeit für die Blockierungsreaktion der Isocyanat-terminierten Polymere. Dies im Vergleich zu den erfindungsgemässen Verfahren, welche eine Schritt B) aufweisen.

Überraschenderweise war dies unabhängig von der Menge an Katalysator K1, welche in Schritt A) eingesetzt wurde.

Der Katalysator K1 bevorzugt zweckmäßigerweise die NCO:OH-Reaktion gegenüber der NCO:Wasser-Reaktion, was zum Beispiel bei Fettsäuresalzen von Zink(II) der Fall ist. Der Katalysator soll sich durch eine hohe katalytische Aktivität und Selektivität hinsichtlich der Urethanisierungsreaktion, d.h. der Reaktion von alkoholischen OH-Gruppen mit Isocyanatgruppen, auszeichnen und so einen raschen und durch Feuchtigkeit möglichst wenig gestörten Aufbau eines mechanisch hochwertigen Polyurethan-Polymers aus polyfunktionellen Alkoholen (Polyolen) und Polyisocyanaten ermöglichen. Zum anderen soll der Katalysator eine ausreichende Hydrolyseresistenz besitzen, um unter üblichen Lagerbedingungen, d.h. bei Raumtemperatur oder bei leicht erhöhten Temperaturen, über mehrere Monate in einer restwasserhaltigen Polyol-Zusammensetzung ohne starken Aktivitätsverlust erhalten zu bleiben. Weiterhin soll der Katalysator die thermische Beständigkeit des ausgehärteten Polyurethan-Polymers möglichst wenig herabsetzen. Überdies soll der Katalysator bei Raumtemperatur oder bei leicht erhöhten Temperaturen flüssig sein bzw. in den Polyurethan-Ausgangsmaterialien oder in Weichmachern gut löslich sein, damit er in bei Raumtemperatur härtenden, lösungsmittelfreien Systemen auf einfache Weise eingesetzt werden kann. Letztendlich soll der Katalysator eine möglichst geringe Giftigkeit aufweisen.

Vorzugsweise ist oder umfasst der Katalysator K1 eine organische Zinnverbindung, insbesondere Dibutylzinndilaurat. Insbesondere ist Katalysator K1 ausgewählt aus der Liste bestehend aus Dibutylzinndiacetat, Dibutylzinndichlorid, Dibutylzinndiacetylacetonat, Dioctylzinndithioglycolat, Dioctylzinnlaurat und Dibutylzinndilaurat. Am meisten bevorzugt ist der Katalysator K1 Dibutylzinndilaurat. Gegebenenfalls können als Katalysator auch Zirkonium-, Zinn-, Eisen-, Vanadium- oder Indiumsalze eingesetzt werden.

Es wurde überraschenderweise gefunden, dass durch die Verwendung von Zinnverbindungen, insbesondere Dibutylzinndilaurat, die Menge an Nebenreaktionsprodukten, welche nur aus Polyisocyanat und Blockierungsmittel bestehen, gegenüber anderen Katalysatorsystemen stark verringert ist. Dies ist insbesondere für die mechanischen Eigenschaften von Klebstoffen, welche diese unerwünschten Nebenprodukte enthalten, vorteilhaft.

Dieser mindestens eine Katalysator K1 für die Umsetzung in Schritt A) liegt bevorzugt in einer Menge im Bereich von 0,5 Gew.-% bis 0,001 Gew.-%, bevorzugter von 0,025 Gew.-% bis 0,002 Gew.-%, am meisten bevorzugt von 0,01 Gew.-% bis 0,005 Gew.-%, bezogen auf das Gesamtgewicht der Summe von a) zwei oder mehr Polyole und b) mindestens einem acyclischen aliphatischen oder cycloaliphatischen Polyisocyanat und c) mindestens einem Blockierungsmittel, vor.

Bei den Schlagzähigkeitsmodifikatoren nach dem erfindungsgemäßen Verfahren sind die Isocyanatgruppen des Isocyanatgruppen-terminierten Polymers durch Reaktion mit dem Blockierungsmittel nach dem Schritt B) teilweise oder vollständig blockiert, wobei bevorzugt mindestens 80%, bevorzugt mindestens 96%, der Isocyanatgruppen des Isocyanat-terminierten Polymers blockiert sind. In einer besonders bevorzugten Ausführungsform sind die Isocyanatgruppen im Wesentlichen vollständig blockiert, d.h. zu mindestens 99%. Bei dem einen Blockierungsmittel c) kann es sich um ein oder mehrere Blockierungsmittel handeln.

Die Blockierung von Isocyanatgruppen durch entsprechende Blockierungsmittel, die thermoreversibel mit Isocyanatgruppen reagieren können, ist auf dem Gebiet eine gängige Maßnahme und der Fachmann kann sie ohne weiteres durchführen. Der Fachmann kennt eine breite Anzahl geeigneter Blockierungsmittel bzw. Blockierungsgruppen, z.B. aus den Übersichtsartikeln von Douglas A. Wick in Progress in Organic Coatings 36 (1999), 148-172 und in Progress in Organic Coatings 41 (2001), 1-83, worauf hiermit verwiesen wird.

Bei dem mindestens einen Blockierungsmittel c) handelt es sich um eine Verbindung mit einer gegenüber Isocyanat reaktiven Gruppe. Bei dem Blockierungsmittel handelt es sich insbesondere um eine protonenaktive Verbindung, die auch als H-acide Verbindung bezeichnet wird. Der Wasserstoff des Blockierungsmittels, der mit einer Isocyanatgruppe reagieren kann (acider Wasserstoff), ist dabei üblicherweise häufig an einem Sauerstoffatom oder einem Stickstoffatom gebunden. Hierbei kann das Blockierungsmittel über den aciden Wasserstoff in einer nucleophilen Additionsreaktion mit freien Isocyanatfunktionalitäten reagieren.

Verbindungen mit SH-reaktiven Protonen wie Dodecanthiol oder 2-Mercaptopyridin, Verbindungen mit CH₂-reaktiven Protonen wie Ethylacetoacetat und Guanidine wie Tetramethylguanidin sind als Blockierungsmittel für die vorliegende Erfindung nicht geeignet.

Das mindestens eine Blockierungsmittel c) ist ausgewählt aus der Gruppe bestehend aus Phenolen, 2-Benzoxazolinonen und Pyrazolen, wobei Phenole besonders bevorzugt sind. Ortho-substituierte Phenole sind aber in der Regel weniger geeignet.

Die Pyrazole können z.B. die folgende Strukturformel aufweisen 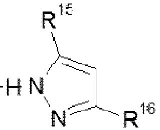 worin R¹⁵ und R¹⁶ jeweils unabhängig voneinander H, Alkyl, z.B. C₁-C₄-Alkyl, Aryl oder Aralkyl sind.

Die Phenole können Monophenole oder Polyphenole wie Bisphenole sein, z.B. Phenole der Formel HO-R¹, wobei R¹ eine ein- oder mehrkernige substituierte oder unsubstituierte Aromatengruppe ist, welche gegebenenfalls eine oder mehrere weitere aromatische Hydroxylgruppen aufweist.

Als Substituent R¹O von Phenolen der Formel HO-R¹ sind Monophenole oder Polyphenole, insbesondere Bisphenole, nach Entfernung eines phenolischen Wasserstoffatoms bevorzugt, insbesondere solche der folgenden Strukturformeln

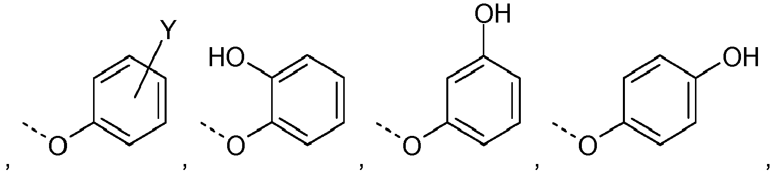

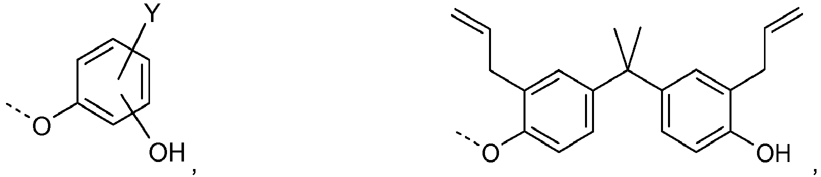

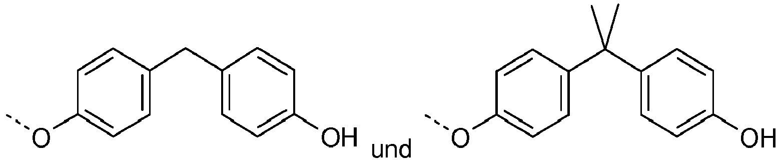

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.

Vorzugsweise ist das c) mindestens eine Blockierungsmittel ausgewählt aus der Gruppe bestehend aus Phenol, Kresol, Resorcinol, Brenzkatechin, 3-Pentadecenylphenol, Nonylphenol, 3-Methoxyphenol, 4-Methoxyphenol, mit Styrol oder Dicyclopentadien umgesetzten Phenolen, Bisphenol A, Bisphenol F, 2,2'-Diallyl-bisphenol-A, 2-Benzooxazolinon und 3,5-Dimethylpyrazol, wobei 3-Pentadecenylphenol bevorzugt ist.

Die Menge an eingesetztem Blockierungsmittel c) in der Mischung umfassend a), b) und c) wird bevorzugt so gewählt, dass das Äquivalentverhältnis der Isocyanatgruppen des Isocyanat-terminierten Polymers zu den mit Isocyanatgruppen reaktiven Gruppen (H-acide Gruppen, z.B. OH oder NH) des Blockierungsmittels im Bereich von 1,5 bis 0,7, bevorzugter von 1,2 bis 0,8, und ganz besonders bevorzugt nahe bei 1:1, liegt.

Vorzugsweise liegt in Schritt A) das Äquivalentverhältnis der Isocyanatgruppen der b) acyclischen aliphatischen oder cycloaliphatischen Polyisocyanate zu den mit Isocyanatgruppen reaktiven Gruppen des c) Blockierungsmittels im Bereich von 1,6 bis 2.4, bevorzugt von 1,7 bis 2.3, und ganz besonders bevorzugt von 1,9 bis 2.2.

In Schritt B) erfolgt die Zugabe von mindestens einem Katalysator K2. Der Katalysator beschleunigt insbesondere die Reaktion des Blockierungsmittels mit gegenüber Isocyanat reaktiven Gruppen mit den Isocyanatgruppen.

In einer Ausführungsform ist oder umfasst der Katalysator K2 derselbe Katalysator wie Katalysator K1. Insbesondere handelt es sich bei dem mindestens einen Katalysator K2 um einen Katalysator, wie er vorgehend als bevorzugt für Katalysator K1 beschrieben wurde.

Dabei ist es weiter vorteilhaft, wenn das Gewichtsverhältnis von Katalysator K1 zu Katalysator K2 von 1/3 bis 2/3 beträgt.

In einer bevorzugten Ausführungsform ist oder umfasst der Katalysator K2 mindestens einen organischen Bismuth-Katalysator, wobei Bi(III)-verbindungen bevorzugt sind, besonders bevorzugt sind Bismuth(III)-neodecanoat und Bismuth(III)-2-ethylhexanoat. Am meisten bevorzugt ist der Katalysator K2 Bismuth(III)-neodecanoat.

Dies ist dahingehend von Vorteil, dass sich die Lagerstabilität der erhaltenen Schlagzähigkeitsmodifikatoren verbessert, wie dies beispielsweise im Vergleich von Ex. 1 mit Ex.2 in Tabelle 4 der Beispiele ersichtlich ist.

Weiter erlaubt dies eine Reduktion der Reaktionstemperatur sowie eine Reduktion der Reaktionszeit in Schritt B). Dies ist beispielsweise im Vergleich der Herstellungsverfahren von SM1 mit SM2 sowie in der Tabelle 2 ersichtlich.

Weiter wurde überraschenderweise festgestellt, dass Klebstoffe, welche solche Schlagzähigkeitsmodifikatoren enthalten, eine verbesserte Zugscherfestigkeit nach Salzwasserlagerung aufweisen.

Die Menge des mindestens einen Katalysators K2, insbesondere wenn es sich bei dem Katalysators K2 um einen organischen Bismuth-Katalysator handelt, liegt, bezogen auf das katalytisch aktive Zentrum, insbesondere Bismuth(III), bevorzugt im Bereich von 0,5 Gew.-% bis 0,005 Gew.-%, bevorzugt von 0,1 Gew.-% bis 0,008 Gew.-%, insbesondere bevorzugt von 0,03 Gew.-% bis 0,008 Gew.-%, bezogen auf das Gesamtgewicht der Summe von a) zwei oder mehr Polyole und b) mindestens einem acyclischen aliphatischen oder cycloaliphatischen Polyisocyanat und c) mindestens einem Blockierungsmittel.

In Schritt A) wird zu einer Mischung umfassend a), b) und c) mindestens ein Katalysator **K1** zugegeben.

Vorzugsweise sind zum Zeitpunkt der Zugabe vom d) mindestens einem Katalysator **K1** bereits mehr als 80 Gewichts-%, insbesondere mehr als 90 Gewichts-%, bevorzugt mehr als 95 Gewichts-%, insbesondere bevorzugt 100 Gewichts-% der im Verfahren eingesetzten a), b) und c) in der Mischung vorhanden.

Die Umsetzung in Schritt A) wird zweckmäßigerweise bei erhöhter Temperatur durchgeführt, z.B. bei einer Temperatur von mindestens 60°C.

Es ist daher bevorzugt, dass in Schritt A) die Umsetzung nach der Zugabe von d) mindestens einem Katalysator **K1** zu der Mischung bei einer Temperatur von 60 - 140 °C, insbesondere 80 - 120 °C, insbesondere bevorzugt 85 - 100 °C, durchgeführt wird.

Überraschenderweise wurde gefunden, insbesondere bei Verwendung von Katalysators **K1** umfassend Zinnkatalysatoren, dass unterhalb von 60°C Schlagzähigkeitsmodifikatoren mit ungenügenden Eigenschaften gefunden wurden. Temperaturen über 140°C führten zu einer ungenügenden Blockierungsreaktion der Isocyanat-terminierten Polymere.

Weiter ist es vorteilhaft, dass in Schritt A) die Umsetzung nach der Zugabe von d) mindestens einem Katalysator **K1** zu der Mischung für mehr als 0.5 h, vorzugsweise 0.5 - 4 h, insbesondere 0.7 - 2.5 h, insbesondere bevorzugt 1 - 1.5 h, durchgeführt wird.

Überraschenderweise wurde gefunden, insbesondere bei Verwendung von Katalysators **K1** umfassend Zinnkatalysatoren, dass bei einer Reaktionszeit der Umsetzung von weniger als 0.5 h Schlagzähigkeitsmodifikatoren mit ungenügenden Eigenschaften gefunden wurden.

Unerwartet war weiter, dass eine Umsetzung von 1 - 1.5 h zu Schlagzähigkeitsmodifikatoren führt, welche in Klebstoffzusammensetzungen zu einer Verbesserung des E-moduls, der Zugscherfestigkeit sowie der Schlagschälfestigkeit führen.

Überraschend war weiter, dass eine Umsetzung von 2.5 - 1.5 h Schlagzähigkeitsmodifikatoren ergibt, welche in Klebstoffzusammensetzungen zu einer verbesserten Lagerstabilität und Viskosität führen.

Vorgehend erwähntes ist beispielsweise im Vergleich von Ex. 2 mit Ex. 4 in der Tabelle 4, respektive Tabelle 5, ersichtlich.

Gegebenenfalls können in der Mischung neben a), b) und c) noch weitere Komponenten anwesend sein, wie beispielsweise Stabilisatoren, z.B. für PTMEG, z.B. Butylhydroxytoluol (BHT).

Es ist jedoch bevorzugt, dass die Mischung in Schritt A) zu ≥ 90 Gew.-%, insbesondere ≥ 95 Gew.-%, insbesondere bevorzugt ≥ 98 Gew.-%, am meisten bevorzugt ≥ 99 Gew.-%, aus a), b) und c) besteht.

Weiter ist es vorteilhaft, wenn während Schritt A) nach d) Zugabe des mindestens einen Katalysators K1 keine weiteren Komponenten zur Reaktion zugegeben werden.

Vorzugsweise beträgt der Isocyanatgehalt der Reaktionsmischung am Ende von Schritt A) 0.4 - 2.5 %, insbesondere 0.6 - 2.0 %, besonders bevorzugt 0.6 - 1.5 %, bezogen auf das Gesamtgewicht der Reaktionsmischung.

Nachfolgend auf Schritt A) folgt in dem Verfahren Schritt B), die Zugabe von mindestens einem Katalysator **K2** unter Bildung des teilweise oder vollständig blockierten Isocyanat-terminierten Polymers. Vorzugsweise folgt Schritt B) unmittelbar auf Schritt A). Es ist weiter bevorzugt, wenn zwischen Schritt A) und Schritt B) keine weiteren Komponenten zur Reaktion zugegeben werden.

Vorzugsweise wird in Schritt B) die Umsetzung nach der Zugabe von mindestens einem Katalysator **K2** für 0.5 - 4 h, insbesondere 0.6 - 2 h, insbesondere bevorzugt 0.7 - 1.5 h, durchgeführt.

Weiter ist es vorteilhaft, wenn in Schritt B) die Umsetzung, nach der Zugabe von mindestens einem Katalysator **K2,** bei einer Temperatur von 70 - 140 °C, insbesondere 80 - 120 °C, insbesondere bevorzugt 85 - 100 °C, durchgeführt wird.

Überraschenderweise wurde gefunden, dass erwähnte Reaktionstemperaturen die Lagerstabilität der Schlagzähigkeitsmodifikatoren erhöht und zu Klebstoffen mit höheren E-modulen, Zugscherfestigkeiten und tieferer Viskosität führen.

Die in Schritt B) erhaltenen Produkte können wie sie sind verwendet bzw. weiterverwendet werden, d.h. eine Aufarbeitung ist im Allgemeinen nicht erforderlich.

Die Blockierung der Isocyanatgruppen mit dem Blockierungsmittel, respektive der Fortgang bzw. die Beendigung der Reaktion kann ohne weiteres anhand der Analyse des Isocyanatgehalts in der Reaktionsmischung kontrolliert werden.

Vorzugsweise beträgt der Isocyanatgehalt der Reaktionsmischung am Ende von Schritt B) weniger als 0.5 Gew-%, insbesondere weniger als 0.25 Gew-%, besonders bevorzugt weniger als 0.2 Gew-%, bezogen auf das Gesamtgewicht der Reaktionsmischung.

Durch Variation der Stöchiometrie der a) zwei oder mehr Polyole und dem b) mindestens einem acyclischen aliphatischen oder cycloaliphatischen Polyisocyanat kann die Struktur oder Kettenlänge der Isocyanat-terminierten Polymere variiert werden.

Das nach dem Schritt B) erhaltene teilweise oder vollständig blockierte Isocyanat-terminierte Polymer weist bevorzugt durchschnittlich 2 bis 4 Polyoleinheiten pro Polymer auf.

Zur Herstellung des Isocyanat-terminierten Polymers sind die Anteile an a) zwei oder mehr Polyole und dem b) mindestens einem acyclischen aliphatischen oder cycloaliphatischen Polyisocyanat insbesondere so, dass in der Mischung umfassend a), b) und c) die Isocyanatgruppen im stöchiometrischen Überschuss gegenüber den Hydroxygruppen der a) zwei oder mehr Polyole vorliegen, wobei das molare Verhältnis von Isocyanatgruppen zu Hydroxygruppen der a) zwei oder mehr Polyole z.B. größer 1,3, vorzugsweise größer 3 zu 2 ist, z.B. im Bereich von 3 zu 1 bis 3 zu 2, bevorzugt nahe im Bereich von 2 zu 1 ist.

In einer bevorzugten Ausführungsform wird nach dem Schritt B) ein Schritt C durchgeführt. Bei dem Schritt C handelt es sich um einen zusätzlichen Schritt A und um einen zusätzlichen Schritt B, wie sie vorgehend als Schritte A, respektive Schritte B, beschreiben wurden.

In dieser bevorzugten Ausführungsform bilden in dem zusätzlichen Schritt A weiter 0.5 - 10 Gew.-%, insbesondere 1 - 5 Gew.-%, bevorzugt 1.5 - 3 Gew.%, des in den vorgehenden Schritten A) und B) erhaltene teilweise oder vollständig blockierten Isocyanat-terminierten Polymers Teil der Mischung, bezogen auf das Gesamtgewicht der im zusätzlichen Schritt A eingesetzten a) zwei oder mehr Polyolen, b) mindestens einem acyclischen aliphatischen oder cycloaliphatischen Polyisocyanat und c) mindestens einem Blockierungsmittel ausgewählt aus der Gruppe bestehend aus Phenolen, 2-Benzoxazolinonen und Pyrazolen.

Dies ist insbesondere in einem Batch-Herstellungsprozess, insbesondere in einer grossindustriellen Anlage vorteilhaft. Einerseits führt dies zu einer Verminderung der Reaktionszeit des zusätzlichen Schritts B). Weiter wurde überraschenderweise gefunden, dass Schlagzähigkeitsmodifikatoren erhalten werden, welche in Klebstoffen zu einer Verbesserung der Zugfestigkeit, der Bruchdehnung sowie der Schlagschälfestigkeit führen sowie Klebstoffe mit verringerter Viskosität erhalten werden. Dies ist beispielsweise im Vergleich von Ex.4 mit Ex. 5 und Ex. 6 in Tabelle 5 ersichtlich.

Es wurde also überraschenderweise gefunden, dass im Reaktionsgefäss verbleibende Reaktionsprodukte aus dem vorgehenden Verfahren nicht zu einer Verminderung der Eigenschaften der Reaktionsprodukte aus dem nachfolgenden Verfahren führen. Dies ist ein wichtiger Vorteil, wodurch auf eine zeitaufwändige Reinigung des Reaktionsgefässes, insbesondere im Falle eines Reaktors in einem grossindustriellen Prozess, verzichtet werden kann. Die Reinigung eines erwähnten Reaktors kann bis zu 8 Stunden dauern.

Ein weiterer Aspekt der vorliegenden Erfindung ist daher ein Schlagzähigkeitsmodifikator hergestellt nach dem vorgehend beschriebenen Verfahren.

Der Schlagzähigkeitsmodifikator nach dem vorgehend beschriebenen Verfahren ist insbesondere für den Einsatz in einem einkomponentigen (1 K) Epoxidharzklebstoff zur Verklebung bei einer Aushärtungstemperatur im Bereich von 110 °C bis 220 C, bevorzugt 140 bis 190 °C, besonders bevorzugt von 155 bis 180 °C, geeignet.

Der 1 K Epoxidharzklebstoff ist insbesondere hitzehärtend und kann flüssig, pastös oder fest sein. Der 1 K Epoxidharzklebstoff ist bevorzugt ein struktureller bzw. crashfester Klebstoff, z.B. für den Automobilbau, OEM-Produkte, EP/PU-Hybride, Strukturschäume aus Epoxidharzsystemen (wie Sika Reinforcer^{®}) oder Reparaturanwendungen.

Ein weiterer Aspekt der vorliegenden Erfindung ist ein einkomponentiger Epoxidharzklebstoff umfassend a) mindestens ein Epoxidharz, b) mindestens einen Härter für Epoxidharze und c) einen Schlagzähigkeitsmodifikator erhalten durch das vorgehend beschriebene Verfahren.

Der Anteil des Schlagzähigkeitsmodifikators in dem 1K Epoxidharzklebstoff kann in breiten Bereichen variieren, liegt aber vorzugsweise in einem Bereich von 5 bis 60 Gew.-%, bevorzugt von 10 bis 25 Gew.-%, bezogen auf das Gesamtgewicht des einkomponentigen Epoxidharzklebstoffs.

Bei dem in dem Epoxidharzklebstoff enthaltenen Epoxidharz kann es sich um jedes übliche auf diesem Gebiet eingesetzte Epoxidharz handeln. Epoxidharze werden z.B. aus der Umsetzung einer Epoxidverbindung wie z.B. Epichlorhydrin mit einem mehrfunktionellen aliphatischen oder aromatischen Alkohol, d.h. einem Diol, Triol oder Polyol, erhalten. Es können ein oder mehrere Epoxidharze eingesetzt werden. Das Epoxidharz ist bevorzugt ein Epoxid-Flüssigharz und/oder ein Epoxid-Festharz.

Als Epoxid-Flüssigharz oder Epoxid-Festharz gelten vorzugsweise Diglycidylether, wie z.B. der Formel (I) 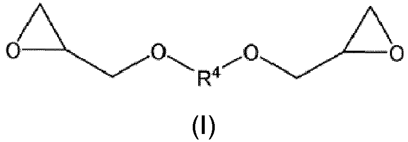 worin R⁴ für einen zweiwertigen aliphatischen oder einkernigen aromatischen oder einen zweikernigen aromatischen Rest steht.

Beispiele für Diglycidylether sind insbesondere
- Diglycidylether von difunktionellen gesättigten oder ungesättigten, verzweigten oder unverzweigten, zyklischen oder offenkettigen C₂-C₃₀-Alkoholen, wie z.B. Ethylenglykol-, Butandiol-, Hexandiol-, Oktandiolgylcidylether, Cyclohexandimethanoldigylcidylether, Neopentylglycoldiglycidylether;
- Diglycidylether von difunktionellen, nieder- bis hochmolekularen Polyetherpolyolen wie z.B. Polyethylenglycol-diglycidylether, Polypropylenglycoldiglycidylether;
- Diglycidylether von difunktionellen Diphenolen und gegebenenfalls Triphenolen, wobei hierunter nicht nur reine Phenole, sondern gegebenenfalls auch substituierte Phenole verstanden werden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen. Als Bisphenole und gegebenenfalls Triphenolen sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoat, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-Bis(p-hydroxyphenyl)phthalid, 5,5-Bis(4-hydroxyphenyl)hexahydro-4,7-methanoindan, Phenolpthalein, Fluorescein, 4,4'-[Bis-(hydroxyphenyl)-1,3-phenylenbis-(1-methyl-ethyliden)] (=Bisphenol-M), 4,4'-[Bis-(hydroxyphenyl)-1,4-phenylenbis-(1-methyl-ethyliden)] (=Bisphenol-P), 2,2'-Diallyl-bisphenol-A, Diphenole und Dikresole hergestellt durch Umsetzung von Phenolen oder Kresolen mit Diisopropylidenbenzol, Phloroglucin, Gallsäureester, Phenol- oder Kresolnovolake mit -OH-Funktionalität von 2,0 bis 3,5 sowie alle Isomeren der vorgenannten Verbindungen.

Besonders bevorzugte Epoxidharze sind Epoxid-Flüssigharze der Formel (A-I) und Epoxid-Festharze der Formel (A-II).

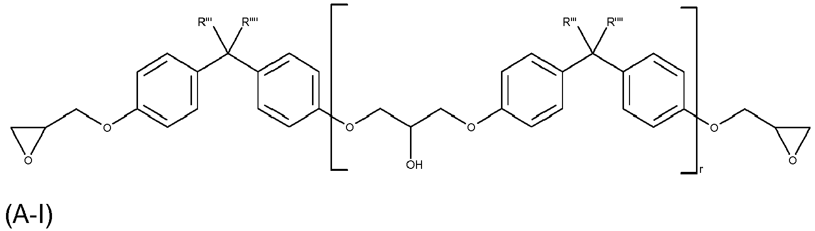

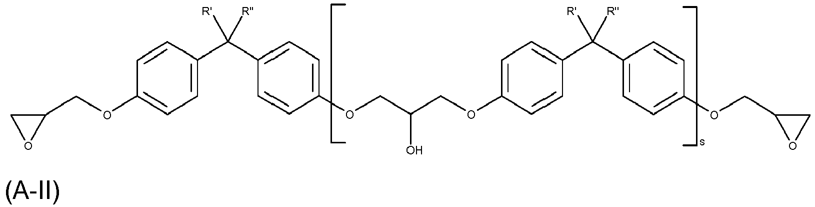

Hierbei stehen die Substituenten R', R", R'" und R"" unabhängig voneinander entweder für H oder CH₃. Weiterhin steht der Index r für einen Wert von 0 bis 1. Bevorzugt steht r für einen Wert von kleiner als 0,2. Weiterhin steht der Index s für einen Wert von >1, insbesondere > 1,5, insbesondere von 2 bis 12.

Verbindungen der Formel (A-II) mit einem Index s von größer 1 bis 1,5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s einen Wert von > 1,5 aufweist.

Derartige Epoxid-Festharze sind kommerziell erhältlich beispielsweise von Dow oder Huntsman oder Hexion. Handelsübliche Epoxid-Flüssigharze der Formel (A-I) sind z.B. als Araldite® GY 250, Araldite® PY 304, Araldite® GY 282 (Huntsman, bzw. Hexion) oder D.E.R.™ 331 oder D.E.R.™ 330 (Dow) oder D.E.R.™ 332 (Dow) oder Epikote 828 (Hexion) erhältlich.

Bevorzugt handelt es beim Diglycidylether der Formel (I) um ein Epoxid-Flüssigharz, insbesondere um ein Epoxid-Flüssigharz der Formel (A-I), insbesondere ein Diglycidylether von Bisphenol-A (BADGE), von Bisphenol-F sowie von Bisphenol-A/F. Ferner sind auch epoxidierte Novolake bevorzugte Epoxidharze.

Der Epoxidharzklebstoff enthält ferner einen Härter für das Epoxidharz. Der Härter ist insbesondere ein Härter, welcher durch erhöhte Temperatur aktiviert wird. Diese Härter werden als latente Härter beschrieben. Unter "erhöhter Temperatur" wird hier in der Regel z.B. eine Temperatur über 100°C, in der Regel über 110°C oder bevorzugter im Bereich von 120 bis 150°C verstanden.

Vorteilhaft beträgt der Gesamtanteil des Härters für Epoxidharze 1 bis 10 Gew.-%, vorzugsweise 2 bis 5 Gew.-%, bezogen auf das Gewicht der gesamten Zusammensetzung.

Es handelt sich bevorzugt um einen latenten Stickstoff enthaltenden Härter für Epoxidharze.

Beispiele für geeignete latente Härter sind Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron), sowie Imidazole und Amin-Komplexe.

Besonders bevorzugt als latenter Härter ist Dicyandiamid.

Als Härter für Epoxidharze können in einer alternativen Ausführungsform insbesondere z.B. Polyamine, Polymercaptane, Polyamidoamine, aminofunktionelle Polyamin/Polyepoxid-Addukte eingesetzt werden, wie sie dem Fachmann als Härter bestens bekannt sind

Der Epoxidharzklebstoff kann gegebenenfalls weiterhin mindestens einen zusätzlichen optionalen Schlagzähigkeitsmodifikator umfassen, welcher verschieden von dem bereits beschriebenen erfindungsgemäßen Schlagzähigkeitsmodifikator ist. Die zusätzlichen Schlagzähigkeitsmodifikatoren können fest oder flüssig sein.

In einer Ausführungsform ist dieser zusätzliche Schlagzähigkeitsmodifikator ein Flüssigkautschuk, welcher ein carboxyl- oder epoxidterminiertes Acrylnitril/ Butadien-Copolymer oder ein Derivat davon ist. Derartige Flüssigkautschuke sind z.B. unter dem Namen Hypro® (früher Hycar®) CTBN und CTBNX und ETBN von Emerald Performance Materials LLC kommerziell erhältlich. Als Derivate sind insbesondere Epoxidgruppen aufweisende Elastomermodifizierte Präpolymere, wie sie unter der Produktlinie Polydis®, vorzugsweise aus der Produktlinie Polydis® 36.., von der Firma Struktol® (Schill + Seilacher Gruppe, Deutschland) oder unter der Produktlinie Albipox® (Evonik Hanse GmbH, Deutschland) kommerziell vertrieben werden, geeignet. In einer weiteren Ausführungsform ist der Schlagzähigkeitsmodifikator ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind z.B. unter der Bezeichnung 20208-XPA von Dow (früher Rohm und Haas) erhältlich.

Es ist dem Fachmann klar, dass natürlich auch Mischungen von Flüssigkautschuken verwendet werden können, insbesondere Mischungen von Carboxyl- oder Epoxid-terminierten Acrylnitril/Butadien-Copolymeren oder Derivaten davon mit Epoxid-terminierten Polyurethanpräpolymeren.

Es hat sich gezeigt, dass in dem Epoxidharzklebstoff vorteilhaft ein oder mehrere zusätzliche Schlagzähigkeitsmodifikatoren vorhanden sind. Als besonders vorteilhaft hat sich gezeigt, dass ein derartiger weiterer Schlagzähigkeitsmodifikator ein Epoxidgruppenden aufweisender Schlagzähigkeitsmodifikator der Formel (II) ist.

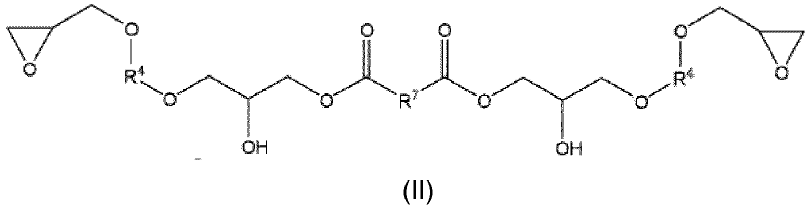

Hierin ist R⁷ ein zweiwertiger Rest eines Carboxylgruppen-terminierten Butadien/ Acrylnitril-Copolymers (CTBN) nach Entfernung der terminalen Carboxylgruppen. Der Rest R⁴ ist wie vorstehend für Formel (I) definiert und beschrieben. Insbesondere steht R⁷ für einen Rest, der durch formelle Entfernung der Carboxyl-Gruppen eines unter dem Namen Hypro® CTBN von Emerald Performance Materials LLC kommerziell vertriebenen Carboxylgruppen-terminierten Butadien/Acrylonitril-Copolymers CTBN, erhalten wird. R⁷ ist bevorzugt ein zweiwertiger Rest der Formel (II').

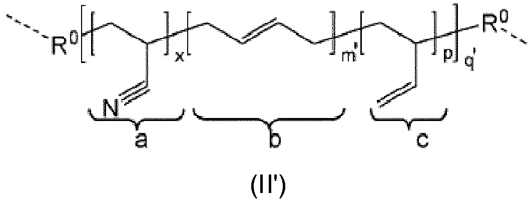

R⁰ steht hierbei für einen linearen oder verzweigten Alkylenrest mit 1 bis 6 C-Atomen, insbesondere mit 5 C-Atomen, welcher gegebenenfalls mit ungesättigten Gruppen substituiert ist. In einer besonders zu erwähnenden Ausführungsform stellt der Substituent R0 einen Rest der Formel (II-a) dar.

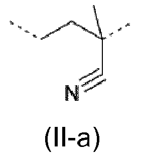

Weiterhin steht der Index q' für einen Wert zwischen 40 und 100, insbesondere zwischen 50 und 90. Die Bezeichnungen b und c stehen für die Strukturelemente, welche von Butadien stammen und a für das Strukturelement, welches von Acrylnitril stammt. Die Indices x, m', und p' stellen ihrerseits Werte dar, die das Verhältnis der Strukturelement a, b und c zueinander beschreiben. Der Index x steht für Werte von 0,05 bis 0,3, der Index m' für Werte von 0,5 - 0,8, der Index p für Werte von 0,1 - 0,2 mit der Maßgabe, dass die Summe von x, m' und p gleich 1 ist.

Dem Fachmann ist verständlich, dass die in Formel (II') gezeigte Struktur als vereinfachte Darstellung zu verstehen sind. Somit können die Bausteine a, b und c jeweils zufällig, abwechselnd oder blockweise zueinander angeordnet sein. Insbesondere stellt somit Formel (II') nicht zwangsläufig ein Triblock-Copolymer dar.

Die Herstellung des Schlagzähigkeitsmodifikator der Formel (II) erfolgt durch die Umsetzung eines Carboxylgruppen-terminierten Butadien/Acrylonitril-Copolymers (CTBN), insbesondere der Formel (III), wobei die Substituenten wie in Formel (II) definiert sind, mit einem vorstehend erläuterten Diglycidylether der Formel (I) in einem stöchiometrischen Überschuss des Diglycidylethers, d.h. dass das Verhältnis der Glycidylether-Gruppen zu den COOH-Gruppen ist größer gleich 2.

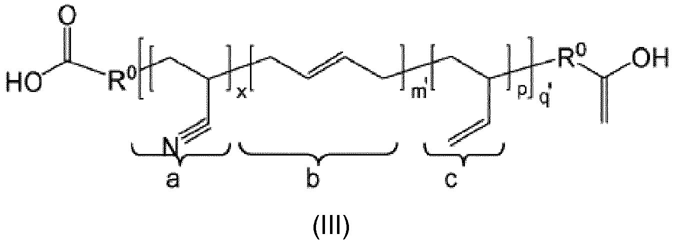

Der Anteil des oder der vorstehend beschriebenen zusätzlichen Schlagzähigkeitsmodifikatoren, der/die von dem Epoxid-terminierten Schlagzähigkeitsmodifikator im erfindungsgemäßen Flüssigkautschuk verschieden ist, beträgt z.B. 0 bis 45 Gew.-%, vorzugsweise 1 bis 45 Gew.-%, insbesondere 3 bis 35 Gew.%, bezogen auf das Gewicht der gesamten Zusammensetzung.

Der Epoxidharzklebstoff kann selbstverständlich noch andere Bestandteile umfassen. Insbesondere sind dies Füllstoffe, Reaktivverdünner, wie Epoxidgruppen-tragende Reaktivverdünner, Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, Tenside, Entschäumer und Haftvermittler. Für diese Additive können alle in der Technik bekannten in den üblichen Mengen eingesetzt werden.

Bei den Füllstoffen handelt es sich z.B. bevorzugt um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs 3 bis 50 Gew.-%, vorzugsweise 5 bis 35 Gew.-%, insbesondere 5 bis 25 Gew.-%, bezogen auf das Gewicht der gesamten Zusammensetzung.

Bei den Reaktivverdünnern handelt es sich insbesondere um:
- Glycidylether von monofunktionellen gesättigten oder ungesättigten, verzweigten oder unverzweigten, zyklischen oder offenkettigen C₄-C₃₀-Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂-C₃₀-Alkoholen, insbesondere ausgewählt aus der Gruppe bestehend aus Ethylenglykol-, Butandiol-, Hexandiol-, Octandiolgylcidylether, Cyclohexandimethanoldiglycidylether und Neopentylglycoldiglycidylether.

- Glycidylether von tri- oder polyfunktionellen, gesättigten oder ungesättigten, ver-zweigten oder unverzweigten, zyklischen oder offenkettigen Alkoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen, insbesondere ausgewählt aus der Gruppe bestehend aus Phenylglycidylether, Kresylglycidylether, p-tert.-Butyl-phenylglycidylether, Nonylphenolglycidylether, 3-n-Pentadecenylglycidylether (aus Cashewnuss-Schalen-Öl), N, N-Diglycidylanilin und Triglycidyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäureglycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycoldiglycidylether oder Polypropylenglycodiglycidylether.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Gesamtanteil des Reaktivverdünners 0,1 bis 20 Gew.-%, vorzugsweise 1 bis 8 Gew.-%, bezogen auf das Gewicht des gesamten Epoxidharzklebstoffs.

Als Weichmacher eignen sich z.B. Phenolalkylsulfonsäureester oder Benzolsulfonsäure-N-butylamid, die als Mesamoll® bzw. Dellatol BBS von Bayer erhältlich sind. Als Stabilisatoren eignen sich z.B. gegebenenfalls substituierte Phenole, wie Butylhydroxytoluol (BHT) oder Wingstay® T (Elikem), sterisch gehinderte Amine oder N-Oxylverbindungen wie TEMPO (Evonik).

In einer besonderen Ausführungsform enthält der Epoxidharzklebstoff ferner mindestens ein physikalisches oder chemisches Treibmittel, insbesondere in einer Menge von 0,1 bis 3 Gew.-%, bezogen auf das Gewicht des Klebstoffs. Bevorzugte Treibmittel sind chemische Treibmittel, welche beim Erhitzen, insbesondere auf eine Temperatur von 100 bis 200 °C, ein Gas freisetzen. Es kann sich um exotherme Treibmittel handeln, wie z.B. Azoverbindungungen, Hydrazinderivate, Semicarbazide oder Tetrazole. Bevorzugt sind Azodicarbonamid und Oxy-bis(benzolsulfonylhydrazid), die bei der Zersetzung Energie freisetzen. Weiterhin geeignet sind auch endotherme Treibmittel, wie beispielsweise Natriumbicarbonat/ Citronensäure-Mischungen. Derartige chemische Treibmittel sind beispielsweise unter dem Namen Celogen® der Firma Chemtura erhältlich. Ebenfalls geeignet sind physikalische Treibmittel, die unter dem Handelsnamen Expancel® der Firma Akzo Nobel vertrieben werden. Expancel® und Celogen® sind besonders bevorzugt.

Beispielhaft sind in Tabelle 1 Komponenten und Anteile für einen bevorzugten 1 K Epoxidharz-Klebstoff, der den Schlagzähigkeitsmodifikator des erfindungsgemässen Verfahrens enthält, aufgeführt.

**Tabelle 1:**

| **VERBINDUNG** | **ANTEILE [GEW.-%]** |
|---|---|
| Basis-Epoxidharz (Flüssigharz, Festharz, epoxidierte Novolake usw.) | 20-60 |
| Schlagzähigkeitsmodifikator nach erfindungsgemässem Verfahren | 5-60 |
| Reaktivverdünner (z.B. Hexandioldiglycidylether) | 0-15 |
| Diisocyanat | 0-10 |
| CTBN-Derivat (z.B. CTBN Epoxidharz Addukte wie z.B. Polydis Struktol von Schil+Seilmacher) | 0-40 |
| Core-Shell Toughener (z.B. Kaneka MX-125 oder andere Kautschukpartikel als unreaktive Flexibilisatoren) | 0-40 |
| Härter und Katalysatoren | 2-14 |
| Organische oder mineralische Füllstoffe | 0-40 |

Die Aushärtung des erfindungsgemäßen Epoxidharzklebstoffs erfolgt insbesondere durch Erhitzen auf eine Temperatur, welche über der Hitzeaktivierung des thermisch aktivierbaren Härters liegt. Diese Aushärtetemperatur ist vorzugsweise eine Temperatur im Bereich von 110°C bis 220 °C, vorzugsweise 140 bis 190 °C, und besonders bevorzugt im Bereich von 155 °C bis 180°C.

Beansprucht wird weiterhin ein Verfahren zur Verklebung von einem ersten Substrat und einem zweiten Substrat mit einem einkomponentigen Epoxidharzklebstoff wie vorstehen beschrieben, wobei mit dem Epoxidharzklebstoff ein Klebverbund zwischen einer Oberfläche des ersten Substrats und einer Oberfläche des zweiten Substrats gebildet wird und der Klebverbund bei einer Temperatur im Bereich von 110 °C bis 220 °C, bevorzugt 140 bis 190 °C, besonders bevorzugt von 155 bis 180 °C, ausgehärtet wird.

Bei den Substraten kann es sich um beliebige Gegenstände oder Teile handeln. Der erfindungsgemäße einkomponentige Epoxidharzklebstoff kann zum Verkleben von Substraten aus dem gleichen Material oder einem verschiedenen Material verwendet werden.

Die Klebstoffe eignen sich insbesondere zum Verkleben von Substraten für Automobile oder An- oder Einbaumodule für Fahrzeuge. Ferner eignen sich die erfindungsgemäßen Klebstoffe auch für andere Anwendungsgebiete. Besonders zu erwähnen sind verwandte Anwendungen im Transportmittelbau wie Schiffe, Lastwagen, Busse oder Schienenfahrzeuge, im Bau von Gebrauchsgütern wie beispielsweise Waschmaschinen, aber auch im Bausektor, beispielsweise als versteifende Strukturklebstoffe.

Die zu verklebenden Substraten können aus einem beliebigen geeigneten Material sein. Bei den geeigneten Materialien handelt es sich bevorzugt um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

### Beispiele

Im Folgenden werden einige Beispiele aufgeführt, welche die Erfindung weiter veranschaulichen, den Umfang der Erfindung aber in keiner Weise beschränken sollen. Sofern nicht anders angegeben, beziehen sich alle Anteile und Prozentsätze auf das Gewicht.

Zur Bestimmung von nachstehend angegebenen Parametern wurden folgende Messverfahren verwendet.

### Bestimmung des Isocyanatgehaltes

Der Isocyanatgehalt wurde in Gew.-% mittels einer Rücktitration mit im Überschuss eingesetztem Di-n-butylamin und 0,1 M Salzsäure bestimmt. Alle Bestimmungen wurden halbmanuell auf einem Mettler-Toledo Titrator des Typs DL50 Graphix mit automatischer potentiometrischer Endpunktbestimmung durchgeführt. Dazu wurden jeweils 600-800 mg der zu bestimmenden Probe unter Erwärmen in einer Mischung aus 10 ml Isopropanol und 40 ml Xylol gelöst und anschließend mit einer Lösung von Dibutylamin in Xylol umgesetzt. Überschüssiges Di-n-butylamin wurde mit 0,1M Salzsäure titriert und daraus der Isocyanatgehalt berechnet.

### Viskosität/Lagerstabilität Schlagzähigkeitsmodifikatoren

Viskositätsmessungen an den Schlagzähigkeitsmodifikatoren (PPU-Viskosität) erfolgten 1 d nach Herstellung auf einem Rheometer vom Typ MCR 101 des Herstellers Anton Paar oszillatorisch unter Verwendung einer Platten-Platten Geometrie bei einer Temperatur von 25°C mit folgenden Parametern: 5 Hz, 1 mm Spalt, Platte-Platte-Abstand 25 mm, 1% Deformation. Die Messresultate sind in den Tabellen 4 und 5 ersichtlich.

Zur Bewertung der Lagerstabilität der Schlagzähigkeitsmodifikatoren (PPU-Stabilität) wurde die Schlagzähigkeitsmodifikatoren nach Lagerung bei 80 °C jeweils nach einer Woche wiederholt auf ihre Lagerstabilität geprüft. Dabei wurden die Proben auf 25°C abgekühlt, ein Holzspatel in das Behältnis mit dem Schlagzähigkeitsmodifikator getaucht und dann der Holzspatel ruckartig einen halben Meter weit herausgezogen. Wird bei dem Hinausziehen ein Fadenzug festgestellt ist das Ende der Lagerstabilität noch nicht erreicht. Führt das Hinausziehen zu einem Fadenabriss, ist das Ende der Lagerstabilität erreicht, dies korreliert mit höher gelierten Polymeren aufgrund von Nachreaktionen unter Vernetzung und Kettenverlängerung.

Die Zeit bis zum Erreichen des Endes der Lagerstabilität ist in den Tabellen 4 und 5 in Wochen angegeben.

### Zugfestigkeit, Bruchdehnung und E-Modul (DIN EN ISO 527)

Eine Klebstoffprobe wurde zwischen zwei Teflonpapieren auf eine Schichtdicke von 2mm verpresst. Nach 20 min Aushärtung bei 175°C wurden die Teflonpapiere entfernt und die Probekörper nach DIN-Norm Zustand ausgestanzt. Die Prüfkörper wurden unter Normklima mit einer Zuggeschwindigkeit von 2 mm/min gemessen. Die Zugfestigkeit, Bruchdehnung und das E-Modul 0,05-0,25%, respektive E-Modul 0,05-1,0 %, wurden gemäss DIN EN ISO 527 bestimmt.

### Kohäsionsbruch/Adhäsionsbruch

Optische Beurteilung des erhaltenen Bruchbildes, unterteilt in CF und AF. CF = Kohäsionsbruch (z.B. 100 CF= 100% Kohäsionsbruch), AF= Adhäsionsbruch (z.B. 100 AF= 100% Adhäsionsbruch).

### Zugscherfestigkeit (LSS) (DIN EN 1465)

Gereinigte und mit Anticorit PL 3802-39S rückbeölte Prüfbleche von Stahl Elo H380 (Dicke 1,5mm) wurden auf einer Klebfläche von 25 x 10mm mit Glaskugeln als Abstandshalter in einer Schichtdicke von 0,3 mm mit dem Klebstoff verklebt und für 20 min bei 175°C Ofentemperatur ausgehärtet. Die Zugscherfestigkeit wurde auf einer Zugmaschine bei einer Zuggeschwindigkeit von 10mm/min in einer 3-fach Bestimmung gemäss DIN EN 1465 bestimmt. Weiter wurden wie vorgehend beschrieben hergestellte Prüfkörper einem Alterungstest unterzogen wobei sie für eine Woche in einer 5 %-igen Salzwasserlösung von 80 °C gelagert wurden (SWIT), für 1 Tag bei Raumtemperatur getrocknet wurden. Anschliessend wurde die Zugscherfestigkeit auf einer Zugmaschine bei einer Zuggeschwindigkeit von 10mm/min in einer 5-fach Bestimmung gemäss DIN EN 1465 bestimmt.

### Schlagschälfestigkeit/Impact peel (gemäss SO 11343)

Die Probenkörper wurden mit dem Klebstoff und Stahl DC04+ZE mit dem Mass 90 x 20 x 0,8mm hergestellt. Dabei betrug die Klebfläche 20 x 30mm bei einer Schichtdicke von 0,3mm und Glaskugeln als Abstandshalter. Die Proben wurden unter Standardbedingungen (20 min, 175°C Ofentemperatur) ausgehärtet. Die Messung der Schlagschälfestigkeit erfolgte jeweils bei den angegebenen Temperaturen (RT = 25°C, -30 °C) als Dreifachbestimmung auf einem Zwick 450 Schlagpendel. Als Schlagschälfestigkeit, wird die gemittelte Kraft in N/mm unter der Messkurve von 25% bis 90% gemäss ISO11343 angegeben.

### Winkelschälfestigkeit (DIN 53281)

Es wurden Prüfbleche a 130 x 25 mm aus Stahl DC-04+ZE (Dicke 0,8mm) präpariert. Prüfbleche wurden auf einer Höhe von 30 mm mit einer geeigneten Stanzmaschine abgewickelt (90°). Die gereinigten und mit Anticorit PL 3802-39S rückbeölten Flächen von 100 x 25 mm wurden mit Glaskugeln als Abstandshalter in einer Schichtdicke von 0,3 mm mit dem Klebstoff verklebt und unter Standardbedingungen (20 min, 175°C Ofentemperatur) ausgehärtet. Die Winkelschälfestigkeit wurde auf einer Zugmaschine mit einer Zuggeschwindigkeit von 10 mm/min in einer 3-fach Bestimmung als Schälkraft in N/mm im Bereich des Traversenweges von 1/6-bis 5/6 Weglänge bestimmt.

### Viskosität/Lagerstabilität Klebstoffe

Viskositätsmessungen an den Klebstoffen erfolgten 1d nach Herstellung auf einem Rheometer vom Typ MCR 101 des Herstellers Anton Paar oszillatorisch unter Verwendung einer Platten-Platten Geometrie bei einer Temperatur von 25°C bzw. 50°C mit folgenden Parametern: 5 Hz, 1 mm Spalt, Platte-Platte-Abstand 25 mm, 1% Deformation.

Zur Bewertung der Lagerstabilität der Klebstoffe wurden die Viskositätsmessung nach Lagerung bei 60 °C für eine Woche wiederholt und der sich nach der Lagerung ergebende prozentuale Viskositätsanstieg ermittelt.

Für die Herstellung der Schlagzähigkeitsmodifikatoren SM-R1 und SM1 bis SM6 wurden folgende Handelsprodukte verwendet:

| Position* | Verbindung | Beschreibung | Hersteller |
|---|---|---|---|
| 1 | PolyTHF^{®} 2000 | difunktionelles Polytetramethylenetherglykol mit einer Molmasse von 2000 g/mol | BASF |
| 2 | Poly bd^{®} R45V | Hydroxyl terminiertes Polybutadien mit einer Molmasse von 2800 g/mol, OH-Funktionalität ca. 2,4-2,6 | Cray Valley |
| 3 | BHT (Ionol^{®} CP) | Stabilisator Butylhydroxytoluol | Evonik |
| 4 | Vestanat IPDI | Isophorondiisocyanat | Evonik |
| 5 | Dibutylzinndilaurat (DBTL) | Katalysator | Thorson |
| 6 | (Bi(III)neodecanoat enthaltende Lösung) | Katalysator, 6 Gew.-% Bismuth (III) in Lösung. | |
| 7 | Cardolite NC-700 | Blockierungsmittel, 8,11,14-Pentadecatrienylphenol (Cardanol, aus Cashewschalen-Öl), | Cardolite Corp., USA |

| | | | |
|---|---|---|---|
| *(vergl. Tabelle 2) | | | |

### Vergleichsbeispiel 1: Schlagzähigkeitsmodifikator SM-R1 (2 Schritt-Verfahren, Katalysator 1 DBTL und Katalysator 2 DBTL)

162.8 g PolyTHF 2000, 162.8 g Poly bd R45V und 1,70 g BHT als Stabilisator wurden vorgelegt und unter Rühren auf 90 °C erwärmt. Anschließend wurden 67.6 g Isophorondiisocyanat (IPDI) unter Rühren zugegeben und nach 5 min wurden 0,033 g Dibutylzinndilaurat (DBTDL) zugegeben. Die Reaktion wurde 2h unter Vakuum bei 90°C bei mäßig starkem Rühren durchgeführt. Danach wurde freie NCO-Gehalt bestimmt: 2,96 %.

Danach wurden 0,066 g Dibutylzinndilaurat (DBTDL) und 106.0 g Cardolite NC-700 zugegeben, für 5 min bei 250 U/min gerührt und für 3 h unter Vakuum bei 110 °C weiterreagiert. Danach wurde freie NCO-Gehalt bestimmt: < 0,25%.

### Beispiel 1: Schlagzähigkeitsmodifikator SM-1 (1 Schritt-Verfahren, Katalysator 1 DBTL und Katalysator 2 DBTL)

162.8 g PolyTHF 2000, 162.8 g Poly bd R45V, 106.0 g Cardolite NC-700 und 1,70 g BHT als Stabilisator wurden vorgelegt und unter Rühren auf 90 °C erwärmt. Anschließend wurden 67.6 g Isophorondiisocyanat (IPDI) unter Rühren zugegeben und nach 5 min wurden 0,033 g Dibutylzinndilaurat (DBTDL) zugegeben. Die Reaktion wurde 2h unter Vakuum bei 90°C bei mäßig starkem Rühren durchgeführt.

Danach wurden 0,066 g Dibutylzinndilaurat (DBTDL) zugegeben, für 5 min bei 250 U/min gerührt und für 3 h unter Vakuum bei 110 °C weiterreagiert. Danach wurde freie NCO-Gehalt bestimmt: < 0,25%.

### Beispiel 2: Schlagzähigkeitsmodifikator SM-2 (1 Schritt-Verfahren, Katalysator 1 DBTL und Katalysator 2 Bismuth)

162.8 g PolyTHF 2000, 162.8 g Poly bd R45V, 106.0 g Cardolite NC-700 und 1,70 g BHT als Stabilisator wurden vorgelegt und unter Rühren auf 90 °C erwärmt. Anschließend wurden 67.6 g Isophorondiisocyanat (IPDI) unter Rühren zugegeben und nach 5 min wurden 0,033 g Dibutylzinndilaurat (DBTDL) zugegeben. Die Reaktion wurde 2h unter Vakuum bei 90°C bei mäßig starkem Rühren durchgeführt.

Danach wurden 1.1 g Bi(III)neodecanoat enthaltende Lösung zugegeben, für 5 min bei 250 U/min gerührt und für 1 h unter Vakuum bei 90 °C weiterreagiert. Danach wurde freie NCO-Gehalt bestimmt: < 0,25%.

### Beispiel 3: Schlagzähigkeitsmodifikator SM-3 (1 Schritt-Verfahren, Katalysator 1 DBTL und Katalysator 2 Bismuth)

Der Schlagzähigkeitsmodifikator SM-3 wurde hergestellt wie vorgehend für SM-2 in Beispiel 2 beschrieben, mit den Unterschied, dass 68.4 g anstelle von 67.6 g Isophorondiisocyanat (IPDI) verwendet wurde.

### Beispiel 4: Schlagzähigkeitsmodifikator SM-4 (1 Schritt-Verfahren, Katalysator 1 DBTL und Katalysator 2 Bismuth)

Der Schlagzähigkeitsmodifikator SM-4 wurde hergestellt wie vorgehend für SM-2 in Beispiel 2 beschrieben, mit den Unterschied, dass nach der Zugabe 0,033 g Dibutylzinndilaurat (DBTDL) die Reaktion für nur 1 h 15 min anstelle von 2 h unter Vakuum bei 90°C bei mäßig starkem Rühren durchgeführt wurde. Weiter wurde nur 0.9 g anstelle von 1.1 g Bi(III)neodecanoat enthaltende Lösung eingesetzt.

### Beispiel 5: Schlagzähigkeitsmodifikator SM-5 (1 Schritt-Verfahren, Katalysator 1 DBTL und Katalysator 2 Bismuth)

2 Gewichts-% des in Beispiel 4 erhaltenen Reaktionsprodukts (10 g) sowie 162.8 g PolyTHF 2000, 162.8 g Poly bd R45V, 106.0 g Cardolite NC-700 und 1,70 g BHT als Stabilisator wurden vorgelegt und unter Rühren auf 90 °C erwärmt. Anschließend wurden 67.6 g Isophorondiisocyanat (IPDI) unter Rühren zugegeben und nach 5 min wurden 0,033 g Dibutylzinndilaurat (DBTDL) zugegeben. Die Reaktion wurde 1h 15 min unter Vakuum bei 90°C bei mäßig starkem Rühren durchgeführt.

Danach wurden 0.9 g Bi(III)neodecanoat enthaltende Lösung zugegeben, für 5 min bei 250 U/min gerührt und für 45 min unter Vakuum bei 90 °C weiterreagiert. Danach wurde freie NCO-Gehalt bestimmt: < 0,25%.

### Beispiel 6: Schlagzähigkeitsmodifikator SM-6 (1 Schritt-Verfahren, Katalysator 1 DBTL und Katalysator 2 Bismuth)

2 Gewichts-% des in Beispiel 5 erhaltenen Reaktionsprodukts (10 g) sowie 162.8 g PolyTHF 2000, 162.8 g Poly bd R45V, 106.0 g Cardolite NC-700 und 1,70 g BHT als Stabilisator wurden vorgelegt und unter Rühren auf 90 °C erwärmt. Anschließend wurden 67.6 g Isophorondiisocyanat (IPDI) unter Rühren zugegeben und nach 5 min wurden 0,033 g Dibutylzinndilaurat (DBTDL) zugegeben. Die Reaktion wurde 1h 15 min unter Vakuum bei 90°C bei mäßig starkem Rühren durchgeführt.

Danach wurden 0.9 g Bi(III)neodecanoat enthaltende Lösung zugegeben, für 5 min bei 250 U/min gerührt und für 45 min unter Vakuum bei 90 °C weiterreagiert. Danach wurde freie NCO-Gehalt bestimmt: < 0,25%.

Die Tabelle 2 gibt eine Übersicht über die Herstellung der vorgehend erwähnten Schlagzähigkeitsmodifikatoren.

**Tabelle 2**

| **SM-R1** | **SM-1** | **SM-2** | **SM-3** | **SM-4** | **SM-5** | **SM-6** |
|---|---|---|---|---|---|---|
| 2 Schritt | 1 Schritt | 1 Schritt | 1 Schritt | 1 Schritt | 1 Schritt | 1 Schritt |
| Vorlegen: Position 1+2+3, Aufheizen auf 90°C | Vorlegen: Position 1+2+3+7, Aufheizen auf 90°C | Vorlegen: Position 1+2+3+7, Aufheizen auf 90°C | Vorlegen: Position 1+2+3+7, Aufheizen auf 90°C | Vorlegen: Position 1+2+3+7, Aufheizen auf 90°C | Vorlegen: **2% Prep SM-4** und Position 1+2+3+7, Aufheizen auf 90°C | Vorlegen: **2% Prep SM-5** und Position 1+2+3+7, Aufheizen auf 90°C |
| Zugabe Pos.4; 5 Minuten bei 225 U/min | Zugabe Pos.4; 5 Minuten bei 225 U/min | Zugabe Pos.4; 5 Minuten bei 225 U/min | Zugabe Pos.4; 5 Minuten bei 225 U/min | Zugabe Pos.4; 5 Minuten bei 225 U/min | Zugabe Pos.4; 5 Minuten bei 225 U/min | Zugabe Pos.4; 5 Minuten bei 225 U/min |
| Zugabe 1/3 Pos.5 (DBTL) | Zugabe 1/3 Pos.5 (DBTL) | Zugabe Pos.5 (DBTL) | Zugabe Pos.5 (DBTL) | Zugabe Pos.5 (DBTL) | Zugabe Pos.5 (DBTL) | Zugabe Pos.5 (DBTL) |
| 2h Rühren bei 90°C | 2h Rühren bei 90°C | 2h Rühren bei 90°C | 2h Rühren bei 90°C | **1h 15 min** Rühren bei 90°C | 1h 15 min Rühren bei 90°C | 1h 15 min Rühren bei 90°C |
| Zugabe 2/3 Pos.5 (DBTL)+ Position 7 (**Cardolite**), 5 Minuten bei 250 U/min | Zugabe 2/3 Pos.5 (DBTL), 5 Minuten bei 250 U/min | Zugabe Pos.6 (**Bismuth**), 5 Minuten bei 250 U/min | Zugabe Pos.6 (Bismuth), 5 Minuten bei 250 U/min | Zugabe Pos.6 (Bismuth), 5 Minuten bei 250 U/min | Zugabe Pos.6 (Bismuth), 5 Minuten bei 250 U/min | Zugabe Pos.6 (Bismuth), 5 Minuten bei 250 U/min |
| Vakuum 40 mbar und aufheizen auf 110°C | Vakuum 40 mbar und aufheizen auf 110°C | Vakuum 40 mbar und aufheizen auf **90**°C | Vakuum 40 mbar und aufheizen auf 90°C | Vakuum 40 mbar und aufheizen auf 90°C | Vakuum 40 mbar und aufheizen auf 90°C | Vakuum 40 mbar und aufheizen auf 90°C |
| 3h rührend; NCO < 0,25% | 3h rührend; NCO < 0,25% | **1h** rührend; NCO < 0,25%messen | 1h rührend; NCO < 0,25%messen | 1h rührend; NCO < 0,25%messen | **45 min** rührend; NCO < 0,25%messen | 45 min rührend; NCO < 0,25%messen |

### Klebstoffzusammensetzungen Ref.1 und Ex. 1 - Ex. 6

Die in Vergleichsbeispiel 1 und den Beispielen 1 bis 6 hergestellten Schlagzähigkeitsmodifikatoren SM-R1 und SM1 bis SM6 wurden jeweils zur Herstellung von Klebstoffen gemäß Tabelle 3 verwendet (SM-R1 für Vergleichsbeispiel Ref.1, SM1 für das erfindungsgemässe Beispiel Ex.1, SM2 für das erfindungsgemässe Beispiel Ex.2, SM3 - SM6 für die erfindungsgemässen Beispiele Ex. 3 - Ex.6.

Zusammensetzungen und Anteile für einen 1 K Epoxidharz-Klebstoff, der einen der Schlagzähigkeitsmodifikatoren SM-R1 und SM1 bis SM6 enthält, sind in Tabelle 3 zusammengefasst. SM-X bezieht sich dabei auf die vorstehend hergestellten Schlagzähigkeitsmodifikatoren SM-R1, SM1, SM2 usw.

**Tabelle 3**

| **Gewichtsteile** | **Chemische Zusammensetzung** | **Funktion** |
|---|---|---|
| 50,6 | Mischung aus Epoxid-harzen basierend auf Bisphenol A | Epoxidharzmatrix |
| 2,6 | Epoxidgruppen-tragende Reaktivverdünner | Reaktivverdünner |
| 20,0 | Blockiertes Polyurethan, SM-X | Schlagzähigkeitsmodifikator |
| 3,7 | Dicyandiamid | Härter |
| 0,2 | substituierter Harnstoff | Beschleuniger |
| 9,1 | Mineralische Füllstoffe auf Basis von CaCO₃ und Silikaten | Füller |
| 5,0 | Calciumoxid | Feuchtigkeitsfänger |
| 8,8 | Pyrogene Kieselsäure | Thixotropiermittel |

Die jeweiligen Klebstoffe wurden in einer Ansatzgrösse von 350 g in einem Planetenmischer gemischt. Hierzu wurde die Mischbüchse mit den flüssigen Komponenten gefolgt von den festen Komponenten gefüllt, wobei der Beschleuniger nicht zugesetzt wurde, und unter leichtem Erwärmen bei Temperaturen von nicht mehr als 40 °C gemischt. Nach Erhalt einer homogenen Mischung wurde die Heizvorrichtung abgestellt und der Beschleuniger wurde mit hoher Scherkraft (ca. 80 U/min, Stufe 3,5) zugemischt. Anschliessend wurde der erhaltene Klebstoff in Kartuschen abgefüllt und bei Raumtemperatur gelagert.

Die Tabellen 4 und 5 zeigen die Ergebnisse der Evaluation der erhaltenen Klebstoffe mit den Schlagzähigkeitsmodifikatoren sowie die Viskosität/Lagerstabilität der einzelnen Schlagzähigkeitsmodifikatoren.

**Tabelle 4**

| | | **Ref.1** | **Ex.1** | **Ex. 2** | **Ex. 3** |
|---|---|---|---|---|---|
| Schlagzähigkeitsmodifikator | | SM-R1 | SM1 | SM2 | SM3 |
| PPU-Viskosität | Visk. 25°C [Pa*s] | 396 | 448 | 369 | 463 |
| PPU-Stabilität | Lagerung 80°C in Wochen | 7 Wochen | 4 Wochen | >8 Wochen | >8 Wochen |
| Zugfestigkeit [MPa] | 20' bei 175°C | 39 | 36.2 | 35.5 | 33.5 |
| Bruchdehnung [%] | | 5 | 7 | 7 | 5 |
| E-Modul (0.05-0.25%) [MPa] | | 2380 | 2375 | 2049 | 1947 |
| E-Modul (0.05-1.0%) [MPa] | | 2064 | 2044 | 1861 | 1781 |
| Zugscherfestigkeit [MPa] | 20' bei 175° | 36.4 | 34.3 | 34.8 | 34.6 |
| | 20' bei 175°, Alterung SWIT 80°C | 28.6 | 19.8 | 22.0 | 22.9 |
| | Werteabfall | 21.5% | 42.3% | 36.8% | 33.8% |
| | Bruchbild | 70CF/30AF | 100CF | CF | CF |
| Impact peel [N/mm] | Impact-Peel 2 m/s, RT | 25.0±1.4 | 42.5±3.2 | 42.5±3.5 | 40.9±0.9 |
| Impact peel [Bruchbild] | Impact-Peel 2 m/s, RT | 95CF/5AF | 100CF | CF | CF |
| Impact peel [N/mm] | Impact-Peel 2 m/s, -30°C | 2.2±0.7 | 31.8±4.6 | 31.9±1.5 | 31.5±1.3 |
| Impact peel [Bruchbild] | Impact-Peel 2 m/s, -30°C | 15CF/85AF | 100CF | CF | CF |
| Winkelschälfestigkeit [N/mm] | | 3.9 | 9.8 | 10.3 | 10.8 |
| | Bruchbild | 15CF/85AF | 100CF | 100CF | 100CF |
| Viskosität | Visk. 25°C [Pa*s] | 2823 | 2341 | 2472 | 2577 |
| | Visk. 50°C [Pa*s] | 594 | 983 | 1040 | 1038 |
| Stabilität 1w 60°C | 25°C [Pa*s] | 3222 | 2538 | 2624 | 2726 |
| | Visk. Anstieg 25°C [%] | 14 | 8 | 6 | 6 |

**Tabelle 5**

| | | **Ex. 4** | **Ex. 5** | **Ex. 6** |
|---|---|---|---|---|
| Schlagzähigkeitsmodifikator | | SM4 | SM5 | SM6 |
| PPU-Viskosität | Visk. 25°C [Pa*s] | 365 | 338 | 336 |
| PPU-Stabilität | Lagerung 80°C in Wochen | n.b. | n.b. | n.b. |
| Zugfestigkeit [MPa] | 20' bei 175°C | 34 | 34.8 | 35.1 |
| Bruchdehnung [%] | | 5 | 6 | 7 |
| E-Modul (0.05-0.25%) [MPa] | | 2303 | 2214 | 2143 |
| E-Modul (0.05-1.0%) [MPa] | | 1951 | 1963 | 1914 |
| Zugscherfestigkeit [MPa] | 20' bei 175°C | 35.2 | 34.1 | 34.2 |
| | 20' bei 175°C, Alterung SWIT 80°C | 23.1 | 22.8 | 22.9 |
| | Werteabfall | 34.4% | 33.1% | 33.0% |
| | Bruchbild | CF | CF | CF |
| Impact peel [N/mm] | Impact-Peel 2 m/s, RT | 44.4±2.6 | 45.8±1.1 | 46.7±0.7 |
| Impact peel [Bruchbild] | Impact-Peel 2 m/s, RT | CF | CF | CF |
| Impact peel [N/mm] | Impact-Peel 2 m/s, -30°C | 32.0±0.7 | 35.7±1.9 | 32.3±1.9 |
| Impact peel [Bruchbild] | Impact-Peel 2 m/s, -30°C | CF | CF | CF |
| Winkelschälfestigkeit [N/mm] | | 11.8 | 11.8 | 11.1 |
| | Bruchbild | CF | CF | CF |
| Viskosität | Visk. 25°C [Pa*s] | 2897 | 2343 | 1963 |
| | Visk. 50°C [Pa*s] | 1090 | 1018 | 811 |
| Stabilität 1w 60°C | 25°C [Pa*s] | 4130 | 2283 | 2748 |
| | Visk. Anstieg 25°C [%] | 43 | -3 | 40 |

| | | | | |
|---|---|---|---|---|
| n.b. steht für "nicht bestimmt" | | | | |

## Patentansprüche

1. Verfahren zur Herstellung eines Schlagzähigkeitsmodifikators welcher ein Isocyanat-terminiertes Polymer ist, dessen Isocyanatgruppen durch Reaktion mit einem Blockierungsmittel teilweise oder vollständig blockiert sind, umfassend die Schritte
A) die Zugabe zur einer Mischung umfassend
a) zwei oder mehr Polyole umfassend a1) Polytetramethylenetherglycol und a2) mindestens ein Hydroxy-terminiertes Polybutadien, wobei der Gesamtanteil an Polytetramethylenetherglycol und Hydroxy-terminiertem Polybutadien mindestens 95 Gew.-%, bezogen auf das Gesamtgewicht der Polyole, beträgt,
und b) mindestens einem acyclischen aliphatischen oder cycloaliphatischen Polyisocyanat
und c) mindestens einem Blockierungsmittel ausgewählt aus der Gruppe bestehend aus Phenolen, 2-Benzoxazolinonen und Pyrazolen, wobei das Mol-Verhältnis von a) : b) : c) von 0.75-1.2 : 0.8-1.2 : 0.8-1.5 beträgt,
von d) mindestens einem Katalysator **K1** und nachfolgend
B) die Zugabe von mindestens einem Katalysator **K2,** unter Bildung des teilweise oder vollständig blockierten Isocyanat-terminierten Polymers.

2. Verfahren gemäss Anspruch 1, **dadurch gekennzeichnet, dass** in Schritt A) die Umsetzung nach der Zugabe von d) mindestens einem Katalysator **K1** zu der Mischung bei einer Temperatur von 60 - 140 °C, insbesondere 80 - 120 °C, insbesondere bevorzugt 85 - 100 °C, durchgeführt wird.

3. Verfahren gemäss Anspruch 1 oder Anspruch 2, **dadurch gekennzeichnet, dass** in Schritt A) die Umsetzung nach der Zugabe von d) mindestens einem Katalysator **K1** zu der Mischung für mehr als 0.5 h, vorzugsweise 0.5 - 4 h, insbesondere 0.7 - 2.5 h, insbesondere bevorzugt 1 - 1.5 h, durchgeführt wird.

4. Verfahren gemäss einem der vorgehenden Ansprüche, **dadurch gekennzeichnet, dass** in Schritt B) die Umsetzung nach der Zugabe von mindestens einem Katalysator **K2** für 0.5 - 4 h, insbesondere 0.6 - 2 h, insbesondere bevorzugt 0.7 - 1.5 h, durchgeführt wird.

5. Verfahren gemäss einem der vorgehenden Ansprüche, **dadurch gekennzeichnet, dass** in Schritt B) die Umsetzung, nach der Zugabe von mindestens einem Katalysator **K2,** bei einer Temperatur von 70 - 140 °C, insbesondere 80 - 120 °C, insbesondere bevorzugt 85 - 100 °C, durchgeführt wird.

6. Verfahren gemäss einem der vorgehenden Ansprüche, **dadurch gekennzeichnet, dass** das c) mindestens eine Blockierungsmittel ausgewählt ist aus der Gruppe bestehend aus Phenol, Kresol, Resorcinol, Brenzkatechin, 3-Pentadecenylphenol, Nonylphenol, 3-Methoxyphenol, 4-Methoxyphenol, mit Styrol oder Dicyclopentadien umgesetzten Phenolen, Bisphenol A, Bisphenol F, 2,2'-Diallyl-bisphenol-A, 2-Benzooxazolinon und 3,5-Dimethylpyrazol, wobei 3-Pentadecenylphenol bevorzugt ist.

7. Verfahren gemäss einem der vorgehenden Ansprüche, **dadurch gekennzeichnet, dass** in Schritt A) das Äquivalentverhältnis der Isocyanatgruppen der b) acyclischen aliphatischen oder cycloaliphatischen Polyisocyanate zu den mit Isocyanatgruppen reaktiven Gruppen des c) Blockierungsmittels im Bereich von 1,6 bis 2.4, bevorzugt von 1,7 bis 2.3, und ganz besonders bevorzugt von 1,9 bis 2.2, liegt.

8. Verfahren gemäss einem der vorgehenden Ansprüche, **dadurch gekennzeichnet, dass** der Katalysator **K1** einen organischen Zinn-Katalysator, bevorzugt Dibutylzinndilaurat, umfasst oder ist.

9. Verfahren gemäss einem der vorgehenden Ansprüche, **dadurch gekennzeichnet, dass** es sich bei dem Katalysator **K2** um denselben Katalysator wie Katalysator **K1** handelt.

10. Verfahren gemäss einem der Ansprüche 1-8, **dadurch gekennzeichnet, dass** der Katalysator **K2** mindestens einen organischen Bismuth-Katalysator, insbesondere Bismuth(III)-neodecanoat und Bismuth(III)-2-ethylhexanoat, umfasst oder ist.

11. Verfahren gemäss einem der vorgehenden Ansprüche, **dadurch gekennzeichnet, dass** nach dem Schritt B ein Schritt C durchgeführt wird, wobei es sich bei dem Schritt C um einen zusätzlichen Schritt A und einen zusätzlichen Schritt B gemäss einem der Schritte A, respektive Schritte B der vorgehenden Ansprüche handelt, wobei in dem zusätzlichen Schritt A weiter 0.5 - 10 Gew.-%, insbesondere 1 - 5 Gew.-%, bevorzugt 1.5 - 3 Gew.-%, des in den vorgehenden Ansprüchen erhaltenen teilweise oder vollständig blockierten Isocyanat-terminierten Polymers Teil der Mischung bilden,
bezogen auf das Gesamtgewicht der im zusätzlichen Schritt A eingesetzten a) zwei oder mehr Polyolen, b) mindestens einem acyclischen aliphatischen oder cycloaliphatischen Polyisocyanat und c) mindestens einem Blockierungsmittel ausgewählt aus der Gruppe bestehend aus Phenolen, 2-Benzoxazolinonen und Pyrazolen.

12. Schlagzähigkeitsmodifikator hergestellt nach dem Verfahren gemäss irgendeinem der Ansprüche 1 bis 11.

13. Verwendung eines Schlagzähigkeitsmodifikators hergestellt nach dem Verfahren gemäss irgendeinem der Ansprüche 1 bis 11 in einem einkomponentigen Epoxidharzklebstoff zur Verklebung bei einer Aushärtungstemperatur im Bereich von 110 °C bis 220 C, bevorzugt 140 bis 190 °C, besonders bevorzugt von 155 bis 180 °C.

14. Einkomponentiger Epoxidharzklebstoff, umfassend
a) mindestens ein Epoxidharz,
b) mindestens einen Härter für Epoxidharze und
c) einen Schlagzähigkeitsmodifikator hergestellt nach dem Verfahren gemäss irgendeinem der Ansprüche 1 bis 11,
wobei der Anteil des Schlagzähigkeitsmodifikators bevorzugt in einem Bereich von 5 bis 60 Gew.-%, bevorzugter 10 bis 25 Gew.-%, liegt, bezogen auf das Gesamtgewicht des einkomponentigen Epoxidharzklebstoffs.

15. Verfahren zur Verklebung von einem ersten Substrat und einem zweiten Substrat mit einem einkomponentigen Epoxidharzklebstoff nach Anspruch 14, wobei mit dem Epoxidharzklebstoff ein Klebverbund zwischen einer Oberfläche des ersten Substrats und einer Oberfläche des zweiten Substrats gebildet wird und der Klebverbund bei einer Temperatur im Bereich von 110 °C bis 220 °C, bevorzugt 140 bis 190 °C, besonders bevorzugt von 155 bis 180 °C, ausgehärtet wird.
